# EUROPEAN PATENT APPLICATION

(11) **EP 2 830 155 A1**
(43) Date of publication of application: **28.01.2015**
(21) Application number: 14167406.9
(22) Date of filing: 07.05.2014
(51) Int. Cl.: H01Q 9/14, H01Q 9/42, H01Q 1/32, H01Q 21/28

(54) **On-vehicle antenna**

(30) Priority: 26.07.2013 JP 2013155208
(71) Applicant: Kojima Industries Corporation, Toyota-shi, Aichi 471-0875 (JP)
(72) Inventor: Andou, Ryuji, Toyota-shi, Aichi (JP)
(74) Representative: Heim, Florian Andreas

(57) **Abstract**

An object of the present invention is to provide an on-vehicle antenna that can be used in common in a plurality of vehicle types. An antenna element 16 is made of a freely bendable conductive wire. A first fixed-length section 18 is connected at one end to an amplifier 28 and extends in the y-axis negative direction by a length L1. A second fixed-length section 20 is connected at one end to the other end of the first fixed-length section 18 and extends in the x-axis negative direction by a length L2. An adjustment section 22 is connected at one end to the other end of the second fixed-length section 20 and extends in the y-axis positive direction by a length L3. A remaining section 24 is connected at one end to the other end of the adjustment section 22 and extends in the x-axis positive direction by a length L4. The length L1+L2+L3+L4 of the antenna element 16, the length L1 of the first fixed-length section 18, and the length L2 of the second fixed-length section 20 are kept constant and the length L3 of the adjustment section 22 is determined to achieve favorable reception characteristics.

## Description

### PRIORITY INFORMATION

This application claims the benefit of priority to Japanese Laid-Open Patent Publication No. 2013-155208 filed on July 26, 2013, the entirety of which is incorporated herein by reference.

### BACKGROUND OF THE INVENTION

### FIELD OF THE INVENTION

The present invention relates generally to an on-vehicle antenna, and more particularly to an antenna using a conductive wire as an antenna element.

### DESCRIPTION OF RELATED ART

A pole antenna is widely used as an on-vehicle antenna. The pole antenna is a rod-shaped antenna and is fixed to a vehicle body in a standing manner. The pole antenna is projected from a vehicle and therefore acts as one of components that creates an aesthetic appearance of the vehicle. However, some users prefer design without an antenna appearing outside a vehicle.

Therefore, a spoiler antenna having an antenna element disposed within a spoiler is also widely used along with the pole antenna. The spoiler is an accessory component attached to a vehicle body and adjusts an air flow around a vehicle while creating an aesthetic appearance of the vehicle. The spoiler may be an eave-like spoiler disposed on an upper portion of a rear window of a vehicle or a wing-like spoiler disposed on a rear portion of a vehicle. The spoiler is generally made of hollow plastic resin and the antenna element is disposed within the spoiler. Spoiler antennas are described as related techniques in Japanese Laid-Open Patent Publication Nos. 2009-177556A, 2009-177484A, and 2008-283609A.

Other on-vehicle antennas include an antenna having an antenna element disposed within a bumper made of hollow plastic resin and an antenna having an antenna element disposed in an overhead console of a vehicle interior.

### SUMMARY OF THE INVENTION

The on-vehicle antenna described above is a monopole antenna (unbalanced antenna) using a vehicle body as a grounding conductor. Such an antenna has reception characteristics, such as directional characteristics, receiving sensitivity, and a reflection coefficient at a receiving end, that differ depending on a difference in size and shape of a body acting as the grounding conductor. Therefore, it is difficult to use the antenna in common in a plurality of vehicle types having different shapes of grounding conductors such as a body.

An object of the present invention is to provide an on-vehicle antenna that can be used in common in a plurality of vehicle types.

The present invention provides an on-vehicle antenna comprising an antenna element made of a freely bendable conductive wire having a constant length corresponding to a wavelength of reception waves, the antenna element including a fixed-length section having a constant length, an adjustment section having one end connected to one end of the fixed-length section, the adjustment section extending in a direction intersecting with a longitudinal direction of the fixed-length section, and a remaining section having one end connected to the adjustment section, the remaining section extending in a direction intersecting with a longitudinal direction of the adjustment section and extending along with the fixed-length section, the on-vehicle antenna being disposed in a vehicle accessary component, the on-vehicle antenna having characteristics that can be adjusted by changing a length of the adjustment section.

In the on-vehicle antenna according to the present invention, desirably, the vehicle accessory component is a spoiler having its longitudinal direction set to the vehicle width direction, wherein the fixed-length section has its longitudinal direction set to the vehicle width direction.

In the on-vehicle antenna according to the present invention, desirably, the on-vehicle antenna is disposed in the vehicle accessory component along with a side antenna having a different frequency band of a reception signal, wherein the antenna element is bent from the fixed-length section to the adjustment section to provide a space for disposing the side antenna in the vehicle accessory component.

In the on-vehicle antenna according to the present invention, desirably, the on-vehicle antenna is disposed in the vehicle accessory component along with a side antenna having a different frequency band of a reception signal, wherein the antenna element is bent from the adjustment section to the remaining section to provide a space for disposing a hole allowing passage of a signal line from the side antenna in the vehicle accessory component.

In the on-vehicle antenna according to the present invention, desirably, the length of the antenna element is a quarter length of a wavelength corresponding to a center frequency of a frequency band of a reception signal.

In the on-vehicle antenna according to the present invention, desirably, the vehicle accessary component is disposed with a plurality of fixing structures for fixing the antenna element, wherein the antenna element is fixed by selected fixing structures among the plurality of the fixing structures.

In the on-vehicle antenna according to the present invention, desirably, the on-vehicle antenna is used for reception of a signal in a frequency band equal to or greater than 70 MHz and equal to or less than 110 MHz.

According to the present invention, there can be implemented an on-vehicle antenna that can be used in common in a plurality of vehicle types.

### BRIEF DESCRIPTION OF THE DRAWINGS

FIG. 1 is a diagram of a vehicle disposed with a spoiler;
FIG. 2 is a diagram of a spoiler antenna according to an embodiment of the present invention;
FIG. 3 is a diagram of a fixing claw;
FIG. 4 is a diagram of a band-like plastic member;
FIG. 5 is a conceptual diagram of how a length of an adjustment section is changed;
FIG. 6 is a diagram of an impedance locus;
FIG. 7 is a diagram of frequency characteristics of a reflection coefficient; and
FIG. 8 is a diagram of frequency characteristics of receiving sensitivity.

### DETAILED DESCRIPTION OF THE INVENTION

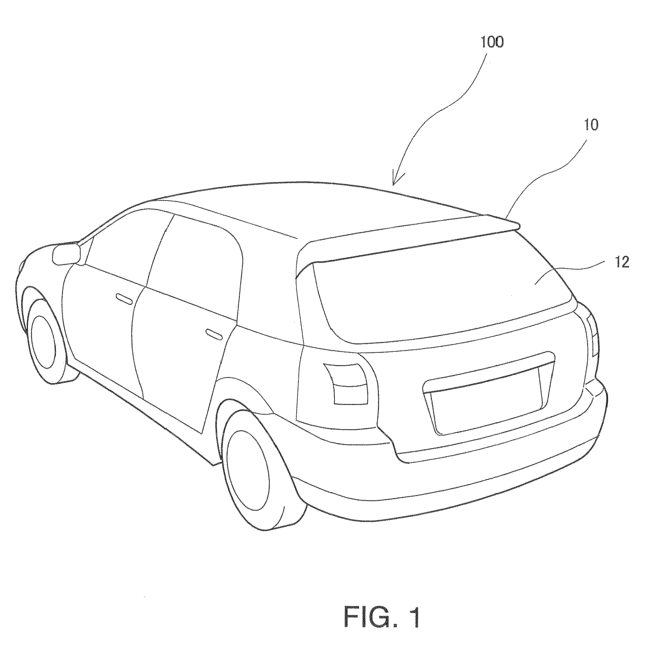

FIG. 1 depicts a vehicle 100. The vehicle 100 has an eave-shaped spoiler 10 having its longitudinal direction set to the vehicle width direction disposed on an upper portion of a rear window 12. The spoiler 10 is a hollow exterior component made of plastic resin etc., and adjusts an air flow around the vehicle 100 while creating an aesthetic appearance of the vehicle 100. The spoiler 10 is equipped with an antenna element, making up a spoiler antenna.

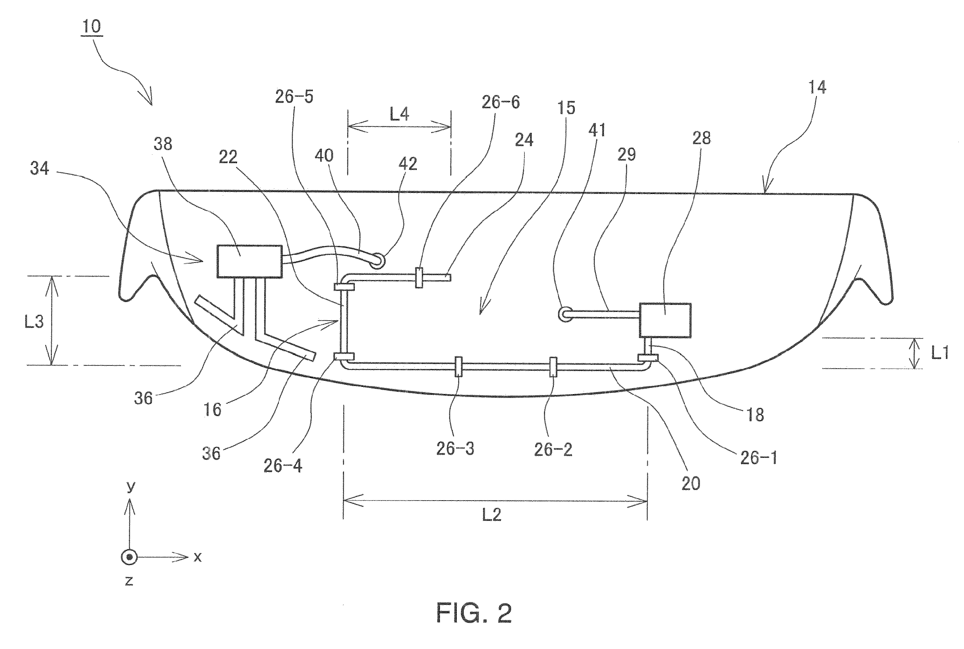

FIG. 2 depicts a spoiler antenna 14 according to an embodiment of the present invention. However, in a state depicted in FIG. 2, a top plate of the spoiler 10 is removed and a bottom surface of the spoiler 10 is revealed. An x-axis direction corresponds to the vehicle width direction and an x-axis positive direction corresponds to the right direction relative to the forward direction of the vehicle. A y-axis positive direction corresponds to the front side of the vehicle and a z-axis positive direction corresponds to the vertically upper direction. The spoiler antenna 14 includes a variable characteristic antenna 15 and a side antenna 34 having different frequency bands of reception signals. The variable characteristic antenna 15 is used for AM radio and FM radio, for example. The side antenna 34 is used for a DAB (digital audio broadcast) receiver and a digital television receiver, for example.

A configuration of the variable characteristic antenna 15 will be described. The variable characteristic antenna 15 includes an antenna element 16 and an amplifier 28. The antenna element 16 is made of a flexible conductive wire; i.e., a freely bendable conductive wire. Such a conductive wire may be a conductive wire made of one linear metal piece or a conductive wire formed by twisting a plurality of linear metal pieces together. The conductive wire forming the antenna element 16 may be coated with an insulator. One end of the antenna element 16 is connected to the amplifier 28 and the other end is opened. The antenna element 16 has a first fixed-length section 18, a second fixed-length section 20, an adjustment section 22, and a remaining section 24. The first fixed-length section 18 is connected at one end to the amplifier 28 and extends in the y-axis negative direction by a length L1. The second fixed-length section 20 is connected at one end to the other end of the first fixed-length section 18 and extends in the x-axis negative direction by a length L2. The adjustment section 22 is connected at one end to the other end of the second fixed-length section 20 and extends in the y-axis positive direction by a length L3. The remaining section 24 is connected at one end to the other end of the adjustment section 22 and extends in the x-axis positive direction by a length L4.

Therefore, the first fixed-length section 18 extends in the longitudinal direction of the vehicle. The second fixed-length section 20 extends in the direction intersecting with the longitudinal direction of the first fixed-length section 18. The adjustment section 22 extends in the direction intersecting with the longitudinal direction of the second fixed-length section 20 and extends along with the first fixed-length section 18. The remaining section 24 extends in the direction intersecting with the longitudinal direction of the adjustment section 22 and extends along with the second fixed-length section 20. As described above, the second fixed-length section 20, the adjustment section 22, and the remaining section 24 form a J-shape or a U-shape.

By forming the antenna element 16 into such a shape, the spoiler 10 is provided with a space for disposing the side antenna 34. In particular, by bending the adjustment section 22 toward the front side (y-axis position direction side) relative to the second fixed-length section 20 extending in the lateral direction (x-axis direction), the antenna element 16 does not reach the left end of the spoiler 16, thereby providing a space for disposing the side antenna 34 on the left side (x-axis negative direction side) of the adjustment section 22. By bending the remaining section 24 toward the right side (x-axis position direction side) relative to the adjustment section 22 extending longitudinally (in the y-axis direction), the antenna element 16 does not reach a front edge of the spoiler 16, thereby providing a space for disposing a harness hole 42 described later on the front side of the remaining section 24.

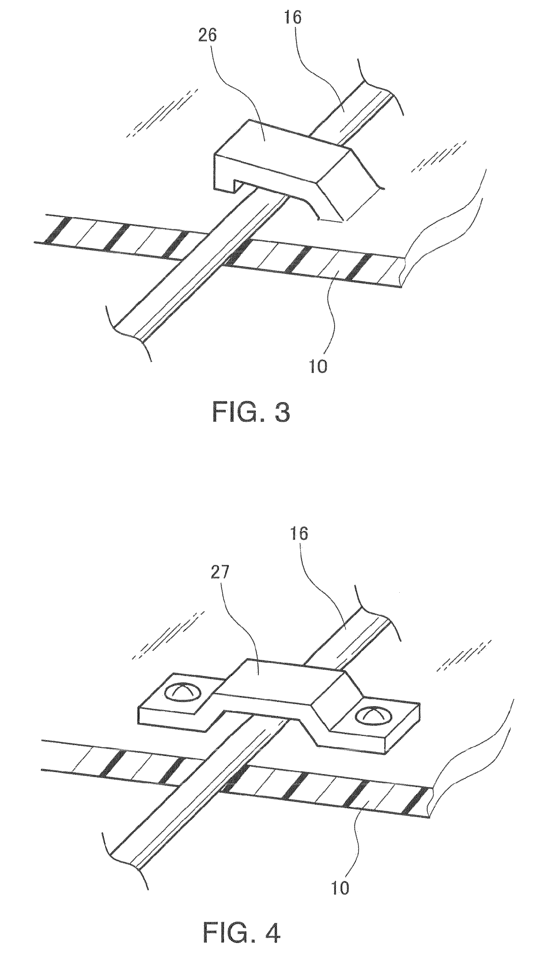

The spoiler 10 is disposed with fixing claws 26-1 to 26-6. FIG. 3 is a perspective view of a fixing claw 26. The antenna element 16 is pinched between a bottom plate of the spoiler 10 and the fixing claw 26 and fixed to the spoiler 10. To fix the antenna element 16 to spoiler 10 while a shape of the antenna element 16 is determined, the spoiler 10 is disposed with a plurality of fixing claws. In this example, as depicted in FIG. 2, the spoiler 10 is disposed with the six fixing claws 26-1 to 26-6. Among these fixing claws, the fixing claw 26-1 defines the direction and length of the first fixed-length section 18. The fixing claws 26-1 to 26-4 define the direction and length of the second fixed-length section 20. The fixing claws 26-4 and 26-5 define the direction and length of the adjustment section 22 and the fixing claw 26-6 defines the direction and length of the remaining section 24.

For a member fixing the antenna element 16 to the spoiler 10, a band-like plastic member 27 as depicted in FIG. 4 may be used as an alternative to the fixing claw 26. In this case, the antenna element 16 may be sandwiched between the band-like plastic member 27 and the bottom plate of the spoiler 10, and the band-like plastic member 27 may be fixed to the spoiler 10 by screws, etc. Alternatively, a groove may be disposed in the bottom surface of the spoiler 10, into which the antenna element 16 is fitted.

A grounding terminal of the amplifier 28 is connected to the body acting as the grounding conductor. As a result, the antenna element 16 operates as an unbalanced antenna using the body as the grounding conductor. The amplifier 28 is connected with a harness 29. The harness 29 is formed as a bundle of a plurality of conductive wires, such as a signal line transmitting a signal received by the antenna element 16 and amplified by the amplifier 28 and a power line supplying power source electric power to the amplifier 28. The harness 29 runs inside the spoiler 10 and is pulled outside the spoiler 10 through a harness hole 41, entering inside the vehicle. The signal line included in the harness 29 is connected to a receiver in the vehicle and the power line is connected to a power supply device in the vehicle. A reception signal received by the antenna element 16 is amplified by the amplifier 28 and then transmitted through the signal line included in the harness 29 to the receiver.

A configuration of the side antenna 34 will be described. The side antenna 34 is disposed on a lateral side of the spoiler 10. In the example depicted in FIG. 2, the side antenna 34 is disposed on the left side (x-axis negative direction side) of the variable characteristic antenna 15. The side antenna 34 includes two side antenna elements 36 and a side amplifier 38. The two side antenna elements 36 are connected to the side amplifier 38 to constitute a balanced antenna. A grounding terminal of the side amplifier 38 is connected to the body acting as the grounding conductor. The side amplifier 38 is connected with a harness 40. The harness 40 is formed as a bundle of a plurality of conductive wires, such as a signal line transmitting a signal received by the side antenna elements 36 and amplified by the side amplifier 38 and a power line supplying power source electric power to the side amplifier 38. The harness 40 runs inside the spoiler 10 and is pulled outside the spoiler 10 through the harness hole 42, entering inside the vehicle. The signal line included in the harness 40 is connected to the receiver in the vehicle and the power line is connected to the power supply device in the vehicle. A reception signal received by the side antenna elements 36 is amplified by the side amplifier 38 and then transmitted through the signal line included in the harness 40 to the receiver. Although in this example the balanced antenna is made up of the two side antenna elements 36, an unbalanced antenna may be configured with one side antenna element 36.

The reception characteristics of the variable characteristic antenna 15 will be described. The reception characteristics of the spoiler antenna 14 include input impedance at a receiving end, a reflection coefficient, receiving sensitivity, etc. The reflection coefficient is determined in accordance with an impedance matching state at the receiving end. The input impedance is impedance from the receiving end toward the antenna element 16. The receiving sensitivity is determined depending on a level of a signal received by the spoiler antenna 14. The reception characteristics may be adjusted by changing respective lengths of the first fixed-length section 18, the second fixed-length section 20, the adjustment section 22, and the remaining section 24. However, if the lengths of the sections are adjusted irregularly, it is difficult to comprehend how the reception characteristics change.

Therefore, the spoiler antenna 14 according to this example has a length L1+L2+L3+L4 of the antenna element 16 set to a quarter length of a wavelength of a reception signal (reception wave). The length L1 of the first fixed-length section 18 and the length L2 of the second fixed-length section 20 are kept constant and the length L3 of the adjustment section 22 is determined in order to achieve favorable reception characteristics.

If a lower limit and an upper limit of the frequency band of the reception signal are fL and fH, respectively, the length L1+L2+L3+L4 of the antenna element 16 is set to a quarter of a wavelength corresponding to one frequency included in a range equal to or greater than the lower limit frequency fL and equal to or less than the upper limit frequency fH. For example, the length L1+L2+L3+L4 of the antenna element 16 is set to a quarter of a wavelength corresponding to a center frequency obtained as an arithmetic mean or a geometric mean of the lower limit frequency fL and the upper limit frequency fH.

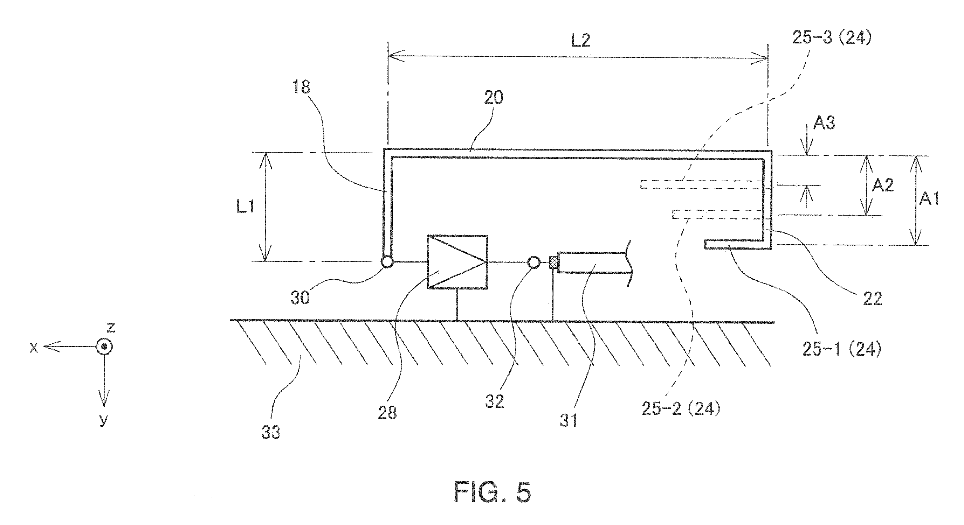

FIG. 5 conceptually depicts how the length of the adjustment section 22 is changed. One end of the first fixed-length section 18 is connected to an input terminal 30 of the amplifier 28 acting as a reception end. One end of the second fixed-length section 20 is connected to the other end of the first fixed-length section 18. One end of the adjustment section 22 is connected to the other end of the second fixed-length section 20. One end of the remaining section 24 is connected to the other end of the adjustment section 22. The grounding terminal of the amplifier 28 is connected to a body 33. An output terminal 32 of the amplifier 28 is connected to a signal line 31 reading to the receiver. A grounding line included in the signal line 31 is connected to the body 33.

A section 25-1 represents the remaining section 24 when the length L3 of the adjustment section 22 is set to L3=A1. A section 25-2 represents the remaining section 24 when the length L3 of the adjustment section 22 is set to L3=A2. A section 25-3 represents the remaining section 24 when the length L3 of the adjustment section 22 is set to L3=A3. The relationship of A1>A2>A3 is satisfied. Since the length L1+L2+L3+L4 of the antenna element 16, the length L1 of the first fixed-length section 18, and the length L2 of the second fixed-length section 20 are constant, as the length L3 of the adjustment section 22 becomes shorter, the remaining section 24 comes closer to the second fixed-length section 20 and becomes longer in the x-axis direction. When the length L3 of the adjustment section 22 is shorter, an electric length of the antenna element 16 becomes shorter and the resonance frequency tends to be higher.

The resonance frequency of the antenna element 16 varies depending on the length L3 of the adjustment section 22. When a frequency of a signal to be received and the resonance frequency of the antenna element 16 have the same value or close values, the reception characteristics often become favorable.

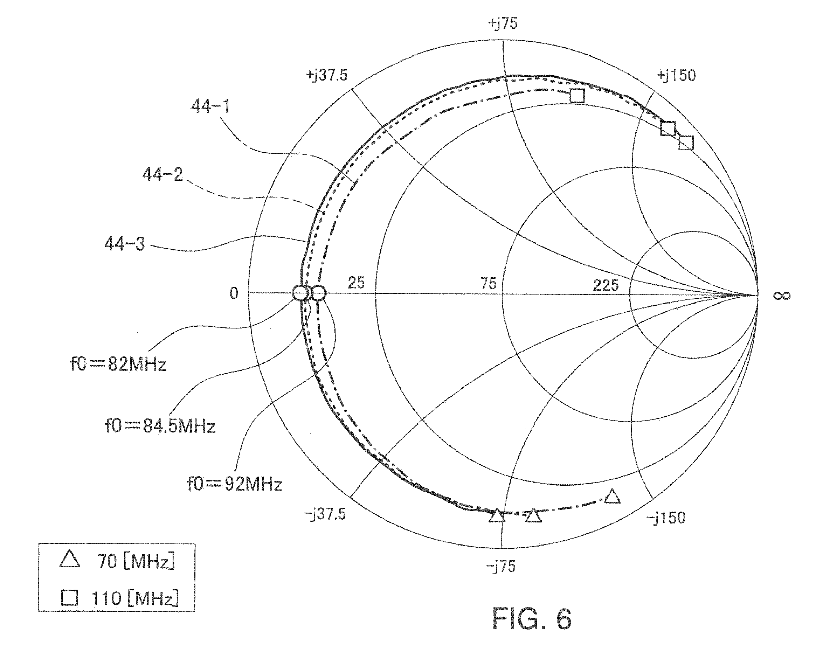

FIG. 6 depicts loci of impedance at the receiving end; i.e., loci of impedance from the receiving end toward the antenna element 16, on a Smith chart for three cases of the different lengths L3 of the adjustment section 22. Impedance loci 44-1, 44-2, and 44-3 are impedance loci when L3 is 10 mm, 70 mm, and 150 mm, respectively. A triangle mark on the loci indicates input impedance at the frequency of 70 MHz. A square mark on the loci indicates input impedance at the frequency of 110 MHz. A circle mark on the loci indicates input impedance at the resonance frequency. The resonance frequency is defined as a frequency at which an imaginary part of impedance becomes zero. When L3 is 10 mm, the resonance frequency is f0=92 MHz. When L3 is 70 mm, the resonance frequency is f0=84.5 MHz. When L3 is 150 mm, the resonance frequency is f0=82 MHz.

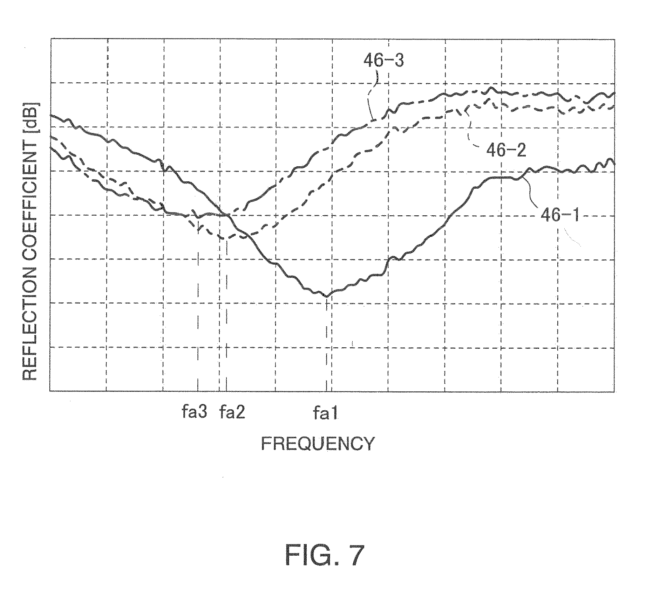

FIG. 7 depicts a result of measurement of the reflection coefficient for three cases of the different lengths L3 of the adjustment section 22. The horizontal axis indicates frequency and the vertical axis indicates the reflection coefficient. The reflection coefficient is a ratio of a level of a reflected signal output to the receiving end from the antenna element 16 relative to a level of a signal incident on the antenna element 16 from the receiving end. When the reflection coefficient is smaller, the impotence matching state at the receiving end is favorable and the reception characteristics are considered favorable.

Reflection characteristics 46-1, 46-2, and 46-3 are frequency characteristics of the reflection coefficient when L3 is 10 mm, 70 mm, and 150 mm, respectively. However, the length L1 of the first fixed-length section 18 is L1=110 mm; the length L2 of the second fixed-length section 20 is L2=450 mm; and a total length L3+L4 of the adjustment section 22 and the remaining section 24 is L3+L4=200 mm. The length L1+L2+L3+L4=760 mm of the antenna element 16 is a quarter of the wavelength of electric waves at the frequency of 98.7 MHz.

As depicted in FIG. 7, the reflection characteristics 46-1, 46-2, and 46-3 are minimized at frequencies of fa1, fa2, and fa3, respectively, and the frequencies have the relationship of fa3<fa2<fa1. Therefore, when the length L3 of the adjustment section 22 is shorter, the frequency minimizing the reflection coefficient is moved toward a higher frequency. It is considered that this is because when the length L3 of the adjustment section 22 is shorter, the resonance frequency of the antenna element 16 becomes higher.

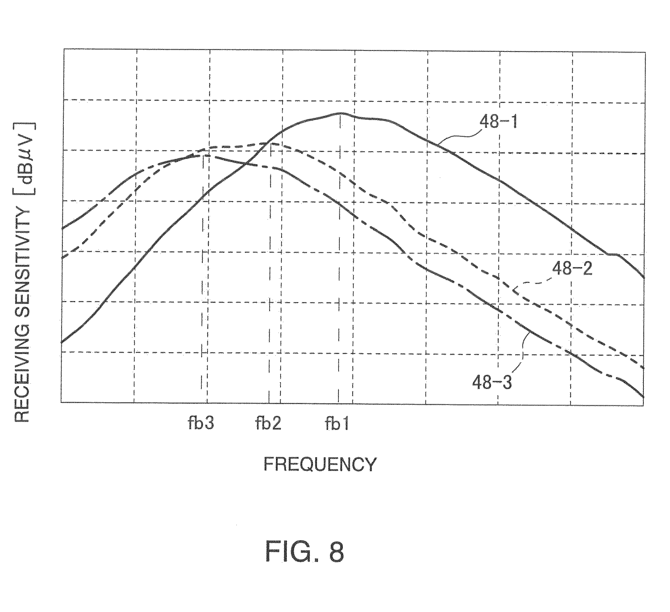

FIG. 8 depicts a result of measurement of the receiving sensitivity under the same condition as when the measurement results of FIGS. 6 and 7 are acquired. The horizontal axis indicates frequency and the vertical axis indicates the receiving sensitivity. The receiving sensitivity is represented by a level of a reception signal output from the receiving end under the condition that electric waves arrive at constant intensity. When the receiving sensitivity is higher, the reception characteristics are considered favorable.

Receiving sensitivity characteristics 48-1, 48-2, and 48-3 are characteristics when L3 is 10 mm, 70 mm, and 150 mm, respectively. As depicted in FIG. 8, the receiving sensitivity characteristics 48-1, 48-2, and 48-3 are maximized at frequencies of fb1, fb2, and fb3, respectively, and the frequencies have the relationship of fb3<fb2<fb1. Therefore, when the length L3 of the adjustment section 22 is shorter, the frequency maximizing the receiving sensitivity is moved toward a higher frequency. It is considered that this is because when the length L3 of the adjustment section 22 is shorter, the resonance frequency of the antenna element 16 becomes higher.

As is apparent from FIGS. 6 to 8, by changing the length L3 of the adjustment section 22 under the condition that the length L1+L2+L3+L4 of the antenna element 16, the length L1 of the first fixed-length section 18, and the length L2 of the second fixed-length section 20 are constant, the frequency associated with favorable reception characteristic can be adjusted. Therefore, in the design of the spoiler antenna 14, the length L3 of the adjustment section 22 achieving favorable characteristics may be determined while the length of the adjustment section 22 is adjusted by changing a position of a connection point between the adjustment section 22 and the remaining section 24 of FIG. 2.

To change the length L3 of the adjustment section 22, the fixing claws, the band-like plastic members, and other fixing structures may be disposed at a plurality of different positions in the vicinity of the fixing claws 26-5 and 26-6 depicted in FIG. 2. In particular, the length L3 of the adjustment section 22 may be adjusted by fixing the antenna element 16 with selected structures among the plurality of these fixing structures.

Description will be made of the case that the same antenna element 16 is used in a plurality of types of vehicles having different body shapes. As described above, the antenna element 16 according to this embodiment operates as an unbalanced antenna. Therefore, if the lengths of the first fixed-length section 18, the second fixed-length section 20, the adjustment section 22, and the remaining section 24 are constant, the reception characteristics becomes different depending on the size and shape of a body acting as the grounding conductor. Therefore, if the lengths of the sections are kept constant, it is difficult to use the antenna element 16 in common in a plurality of types of vehicles having different sizes and shapes of bodies.

Therefore, in the spoiler antenna 14 according to the present invention, the length L1+L2+L3+L4 of the antenna element 16 is standardized at a quarter length of the wavelength of the reception signal for a plurality of types of vehicles. The length L1 of the first fixed-length section 18 and the length L2 of the second fixed-length section 20 are standardized for a plurality of types of vehicles. Additionally, the length L3 of the adjustment section 22 is individually determined for each vehicle such that the reception characteristics become optimum.

If the frequency of the reception signal is within a band having a certain width, the length L1+L2+L3+L4 of the antenna element 16 is determined in the same way as the design for one vehicle type described above. In particular, if the lower limit and the upper limit of the frequency band of the reception signal is fL and fH, respectively, the length L1+L2+L3+L4 of the antenna element 16 is set to a quarter of the wavelength corresponding to one frequency included in the range equal to or greater than the lower limit frequency fL and equal to or less than the upper limit frequency fH. For example, the length L1+L2+L3+L4 of the antenna element 16 is set to a quarter of a wavelength corresponding to a center frequency obtained as an arithmetic mean or a geometric mean of the lower limit frequency fL and the upper limit frequency fH.

By using the flexible antenna element 16 as described above, the antenna element 16 can be used in common in a plurality of types of vehicles. As a result, design cost and manufacturing cost of each vehicle type are reduced.

Although in the described embodiment the angle formed by the first fixed-length section 18 and the second fixed-length section 20, the angle formed by the second fixed-length section 20 and the adjustment section 22, and the angle formed by adjustment section 22 and the remaining section 24 are right angles, these angles may not necessarily be right angles. The sections may not necessarily be linear and may form a curve.

The antenna element 16 may be disposed in a common vehicle accessory component such as a bumper, a side mirror, a periphery of a windowpane, or an overhead console, in addition to a spoiler.

## Claims

1. An on-vehicle antenna comprising:
an antenna element made of a freely bendable conductive wire having a constant length corresponding to a wavelength of reception waves,
the antenna element including
a fixed-length section having a constant length,
an adjustment section having one end connected to one end of the fixed-length section, the adjustment section extending in a direction intersecting with a longitudinal direction of the fixed-length section, and
a remaining section having one end connected to the adjustment section, the remaining section extending in a direction intersecting with a longitudinal direction of the adjustment section and extending along with the fixed-length section,
the on-vehicle antenna being disposed in a vehicle accessary component, the on-vehicle antenna having characteristics that can be adjusted by changing a length of the adjustment section.

2. The on-vehicle antenna of claim 1, wherein
the vehicle accessory component is a spoiler having its longitudinal direction set to the vehicle width direction, and wherein
the fixed-length section has its longitudinal direction set to the vehicle width direction.

3. The on-vehicle antenna of claim 1, wherein
the on-vehicle antenna is disposed in the vehicle accessory component along with a side antenna having a different frequency band of a reception signal, and wherein the antenna element is bent from the fixed-length section to the adjustment section to provide a space for disposing the side antenna in the vehicle accessory component.

4. The on-vehicle antenna of claim 1, wherein
the on-vehicle antenna is disposed in the vehicle accessory component along with a side antenna having a different frequency band of a reception signal, and wherein the antenna element is bent from the adjustment section to the remaining section to provide a space for disposing a hole allowing passage of a signal line from the side antenna in the vehicle accessory component.

5. The on-vehicle antenna of claim 1, wherein
the length of the antenna element is a quarter length of a wavelength corresponding to a center frequency of a frequency band of a reception signal.

6. The on-vehicle antenna of claim 1, wherein
the vehicle accessary component is disposed with a plurality of fixing structures for fixing the antenna element, and wherein
the antenna element is fixed by selected fixing structures among the plurality of the fixing structures.

7. The on-vehicle antenna of claim 1, wherein
the on-vehicle antenna is used for reception of a signal in a frequency band equal to or greater than 70 MHz and equal to or less than 110 MHz.
